# EUROPÄISCHE PATENTANMELDUNG

(11) **EP 1 040 998 A2**
(43) Veröffentlichungstag der Anmeldung: **04.10.2000**
(21) Anmeldenummer: 00106669.5
(22) Anmeldetag: 29.03.2000
(51) Int. Cl.: B63C 3/12, F15B 15/16, B62D 49/00

(54) **Zugvorrichtung an einem Schleppfahrzeug zum Aus- oder Einbringen eines Bootes aus dem oder in das Wasser**

(30) Priorität: 31.03.1999 DE 29905886 U
(71) Anmelder: Knijpstra Konstruktie B.V., 8449 EC Terband-Heerenveen (NL)
(72) Erfinder: Knijpstra, Hette, 8849 BA Terband-Heerenveen (NL)
(74) Vertreter: Meyer, Ludgerus A., Dipl.-Ing.

(57) **Zusammenfassung**

Es wird eine Zugvorrichtung (5,6,7,8,14) an einem Schleppfahrzeug (4) zum Aus- oder Einbringen eines Bootes (1) aus dem oder in das Wasser angegeben, wobei die Zugvorrichtung (5,6,7,8,14) zum Ankoppeln eines das Boot (1) tragenden Trailers (3) an das Schleppfahrzeug (4) ausgebildet ist. Die Zugvorrichtung ist teleskopförmig gestaltet, um ein weites Hineinfahren des Trailers (3) in das Wasser oder Herausfahren aus dem Wasser zu ermöglichen, ohne daß das Schleppfahrzeug (4) zu weit in das Wasser eingefahren werden muß.

## Beschreibung

Die Erfindung betrifft eine Zugvorrichtung an einem Schleppfahrzeug zum Aus- oder Einbringen eines Bootes aus dem oder in das Wasser nach dem Oberbegriff des Anspruchs 1.

Während das Herausheben eines großen Schiffes aus dem Wasser üblicherweise in einem Trockendock erfolgt, werden Boote der Sportschiffahrt, insbesondere Segelboote oder Motorboote, überwiegend auf einer Helling unmittelbar auf einen Bootstrailer aufgesetzt und mittels eines Zugfahrzeuges aus dem Wasser gezogen. Dabei wird der Bootstrailer unter das auf der Helling schwimmende Boot gefahren und ggf. bis an den Bootsrumpf angehoben. Der Bootstrailer wird dann zusammen mit dem Boot aus dem Wasser herausgezogen.

Während sich dieses Verfahren bei kleineren Booten bewährt hat, treten aber Probleme bei größeren Booten oder einer sehr flachen Helling auf. Bei größeren Booten verhindert insbesondere die Kielanordnung ein nahes Heranfahren des Schiffes an das Ufer. Zu dem gleichen Problem führt eine sehr flach geneigte Helling. Um den Bootstrailer dennoch unter das Boot fahren zu können, muß das Schleppfahrzeug sehr weit in das Wasser hineinfahren, um den Bootstrailer unter das Boot bringen zu können. Übliche Schleppfahrzeuge sind jedoch nur beschränkt in der Lage, in größere Wassertiefen einzufahren. Die Probleme des Heraushebens eines Bootes treten in gleicher Weise beim Hineinfahren eines Bootes in das Wasser auf.

Der Erfindung liegt daher die Aufgabe zugrunde, eine Zugvorrichtung an einem Schleppfahrzeug anzugeben, die die genannten Probleme vermeidet, die insbesondere auch für größere Boote einsetzbar ist und auch auf sehr flachen Hellingen verwendbar bleibt.

Diese Aufgabe wird durch die im Anspruch 1 angegebene Erfindung gelöst. Vorteilhafte Weiterbildungen der Erfindung sind in Unteransprüchen angegeben.

Gemäß der Erfindung ist eine Zugvorrichtung zum Aus- oder Einbringen eines Bootes aus dem oder in das Wasser vorgesehen, die an einem Schleppfahrzeug anbringbar ist und teleskopisch ausfahrbar ist.

An einem Schleppfahrzeug kann daher ein Basisprofil befestigt werden, aus dem ein oder mehrere teleskopartige ineinander in Axialrichtung des Basisprofils verschiebbare Schubprofile ausgefahren werden können, wobei das innerste Schubprofil an seinem hinteren Ende eine Kupplung trägt, die mit einem Bootstrailer verbindbar ist.

Das Vor- und Zurückschieben der Zugvorrichtung erfolgt vorzugsweise mittels hydraulischer oder pneumatischer Betätigung vom Schleppfahrzeug aus.

Durch den Einsatz der Erfindung kann die Fahrtiefe in das Wasser für das Schleppfahrzeug erheblich reduziert werden, da die Zugvorrichtung bis zu einer Länge von mehr als 10 m ausgefahren werden kann. Dies ist für die meisten Sportboote ausreichend und erlaubt auch das Einfahren und Ausfahren von Booten auf sehr flachen Hellingen.

Das Einbringen eines Bootes in das Wasser erfolgt insbesondere dadurch, daß das mit der erfindungsgemäßen Zugvorrichtung versehene Schleppfahrzeug das Boot rückwärts auf der Helling herunterfährt, wobei das Schleppfahrzeug bis zu einer zugelassenen Wassertiefe zurückfährt oder u. U. überhaupt nicht in das Wasser hineinfährt. Dann wird die Zugvorrichtung langsam ausgefahren, wodurch der Bootstrailer zusammen mit dem Boot weit in das Wasser eingefahren werden kann. Sobald das Boot freigeschwommen ist, kann der Bootstrailer wieder aus dem Wasser herausgefahren werden.

Vorzugsweise kann wenigstens einer der Befestigungspunkte der Zugvorrichtung am Schleppfahrzeug auch quer zur Längserstreckung der Zugvorrichtung, insbesondere durch einen zusätzlichen Hydraulikzylinder, in horizontaler und/oder vertikaler Richtung gesteuert werden. Dadurch kann auch bei still stehendem Schleppfahrzeug eine Richtungsteuerung des Endes der Zugvorrichtung, welches mit dem Trailer verbunden ist, vorgenommen werden.

Als Schleppfahrzeug wird vorzugsweise ein üblicher landwirtschaftlicher Traktor verwendet, der eine vordere Anhängerkupplung und einen hinteren Hydraulikträger aufweist. Der Hydraulikträger ermöglicht bereits selbst eine vertikale und ggf. horizontale Ausrichtung der Zugvorrichtung bei entsprechender Betätigung. Eine konstruktive Anpassung des Schleppfahrzeuges an die Zugvorrichtung ist nicht erforderlich, wenn die Zugvorrichtung an die entsprechenden Befestigungspunkte des Schleppfahrzeuges angepaßt ist.

Die Erfindung wird nachstehend anhand eines Ausführungsbeispiels näher erläutert. Es zeigen:
- Fig. 1: eine Siuation, in der mittels einer erfindungsgemäßen Zugvorrichtung ein Boot aus dem Wasser herausgezogen werden soll,
- Fig. 2: das mittels der Zugvorrichtung zum Schleppfahrzeug herangezogene Boot,
- Fig. 3: eine schematische Aufsicht auf eine Zugvorrichtung, und
- Fig. 4: eine Darstellung einer verbesserten Ausführungsform der Erfindung.

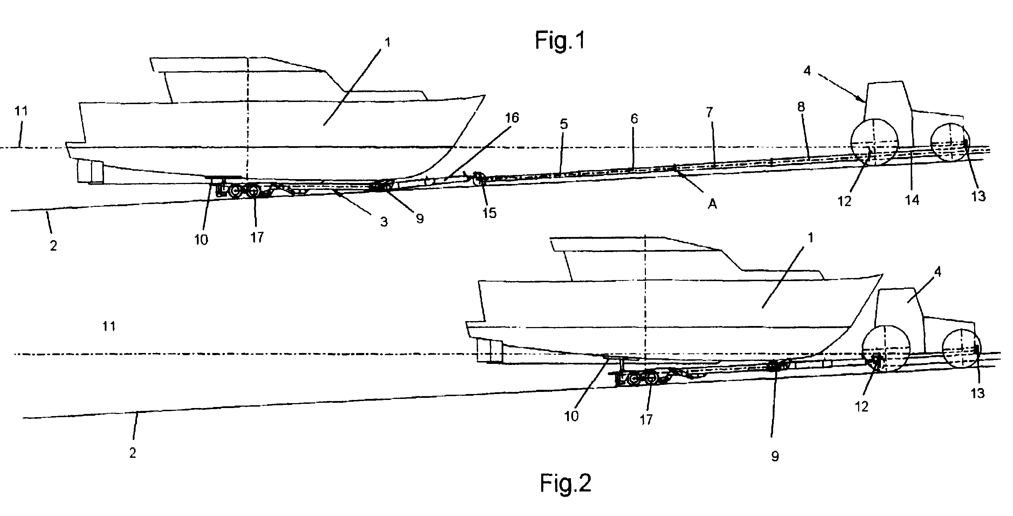

Fig. 1 zeigt ein Boot 1, das über eine Helling 2 gefahren ist. Das Boot ist hier als Motorboot dargestellt, es kann jedoch jede beliebige Rumpfausbildung aufweisen, die auf einen Trailer aufsetzbar ist.

Unterhalb des Bootsrumpfes ist ein Trailer 3 dargestellt, der dem Herausfahren des Bootes aus dem Wasser dient. Der Trailer 3 weist Stützen 10 auf, um das Boot auf dem Trailer zu sichern. Zur Bewegung des Trailers im Gelände dient ein Fahrwerk 17. Am vorderen Ende des Trailers befindet sich ein Stützgelenk 9, welches mit einer Deichsel 16 verbunden ist. Am vorderen Ende der Deichsel befindet sich eine Kupplung 15.

Die erfindungsgemäße Zugvorrichtung ist an der Unterseite eines Schleppfahrzeuges 4 angeordnet und besteht insbesondere aus einem Basisprofil 14 und ein oder mehreren Schubprofilen 5, 6, 7, 8, die teleskopisch ineinander greifen. Die Schubprofile 5 - 8 befinden sich im eingefahrenen Zustand nahzu vollständig im Basisprofil. Der Querschnitt des Basisprofils und der Schubprofile kann rechteck- oder röhrförmig ausgebildet sein.

Die Befestigung der Zugvorrichtung erfolgt am Schleppfahrzeug 4, insbesondere an zwei oder drei üblichen Befestigungspunkten, wobei das vordere Ende des Basisprofils 14 zur Vermeidung einer Anpassung des Schleppfahrzeuges an der vorderen Anhängerkupplung 13 eines üblichen landwirtschaftlichen Traktors befestigbar ist. Das hintere Ende des Basisprofils wird mit dem Hydraulikträger 12 des Schleppfahrzeuges verbunden, so daß neben einer stabilen Befestigung auch eine vertikale und/oder horizontale Steuerung möglich ist. Die Befestigung des Basisprofils an dem Hydraulikträger kann über in der Landtechnik an sich bekannte Befestigungsvorrichtungen für Traktoren erfolgen.

Das Aus- und Einfahren der Schubprofile 5 - 8 erfolgt vorzugsweise mittels Hydraulik- oder Pneumatikzylinder. Es läßt sich mit dieser Einrichtung ohne weiteres eine Ausfahrlänge von mehr als 10 m erreichen, welches für die meisten Einsatzfälle ausreichend ist.

Bei der in Fig. 1 gezeigten Situation befindet sich das Schleppfahrzeug 4 lediglich in einer geringen Wassertiefe, während das Boot 1 weit hinter dem Schleppfahrzeug auf dem Trailer 3 aufsitzt. Durch Betätigung der der Zugvorrichtung zugeordneten Hydraulik- oder Pneumatikzylinder werden die Schubprofile der Reihe nach in das Basisprofil eingeschoben, ohne daß sich das Schleppfahrzeug bewegt. Das Boot 1 wird damit bis zum Schleppfahrzeug herangezogen und kann dann vom Schleppfahrzeug ohne Probleme an Land gefahren werden.

Fig. 2 zeigt die entsprechende Situation, in der das Schleppfahrzeug 4 das Boot 1 bis zu sich herangezogen hat.

Die Erfindung kann insbesondere in Situationen eingesetzt werden, in denen der Winkel der Helling 2 zur Wasserlinie 11 sehr klein ist, so daß lange Wege zurückgelegt werden müssen, um das Boot in das Wasser hineinzufahren oder aus dem Wasser heraus zu ziehen.

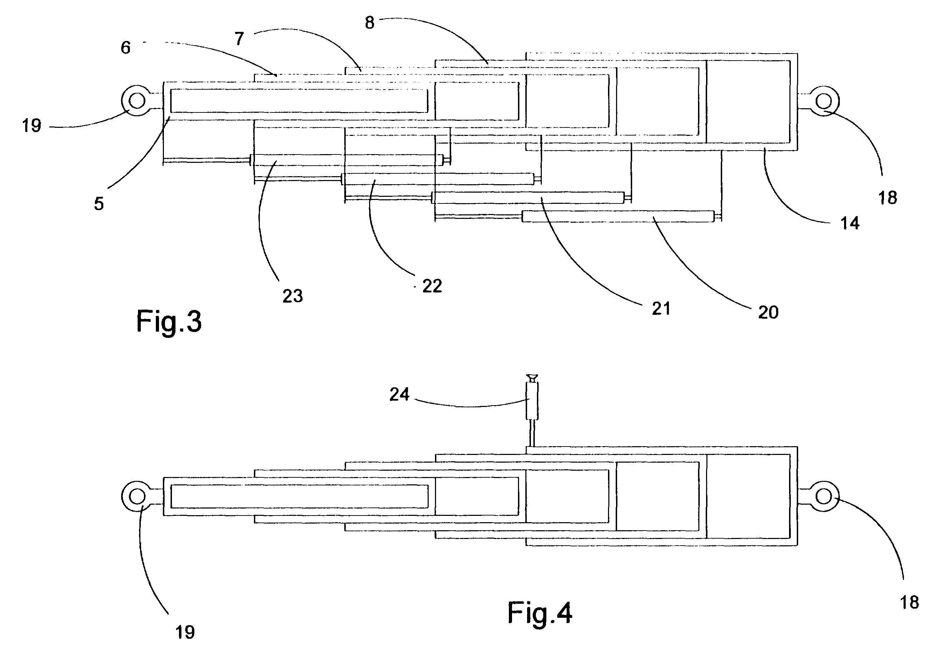

Fig. 3 zeigt eine in Längsrichtung gestaucht dargestellte schematische Aufsicht auf eine erfindungsgemäße Zugvorrichtung. Diese weist am vorderen Ende eine Kupplung 18 auf, die mit der Anhängerkupplung 13 des Schleppfahrzeuges verbindbar ist. Das hintere Ende des innersten Schubprofils weist ein Kupplungsteil 19 auf, das mit der Kupplung 15 der Deichsel 16 des Trailers 3 verbindbar ist. Die einzelnen Schubprofile 5 - 8 der Zugvorrichtung sind mittels Hydraulikzylinder 20-23 aus- und einfahrbar. Anstelle der dargestellten Hydraulik- oder Pneumatikzylinder, die insbesondere als Differentialzylinder ausgebildet sein können, kann jede andere Art der Betätigung der erfindungsgemäßen teleskopischen Zugvorrichtung gewählt werden, einschließlich der mechanischen Betätigung über Seilführungen oder Kettenantriebseinrichtungen. Da das Schleppfahrzeug in der Regel hydraulische oder pneumatische Betätitungsvorrichtungen aufweist, wird vorzugsweise die hydraulische oder pneumatische Versorgung der Zylinder der Zugvorrichtung über das Schleppfahrzeug in Anspruch genommen.

Fig. 4 zeigt eine verbesserte Ausführungsform der Erfindung, bei der ein zusätzlicher Zylinder 24 vorgesehen ist, um eine Steuerung in Querrichtung zur Axialerstreckung des Basisprofils 14 zu ermöglichen. Obgleich nur ein Zylinder 24 dargestellt ist, können auch mehrere Zylinder verwendet werden, um sowohl eine horizontale als auch eine vertikale Ausrichtung eines Endes der Zugvorrichtung vornehmen zu können. Sofern diese Steuerung bereits durch den Hydraulikträger des Schleppfahrzeuges möglich ist, kann darauf natürlich verzichtet werden.

### Bezugszeichenliste

- 1: Boot
- 2: Helling
- 3: Trailer
- 4: Schleppfahrzeug
- 5: Schubprofil
- 6: Schubprofil
- 7: Schubprofil
- 8: Schubproil
- 9: Stützgelenk
- 10: Stützen
- 11: Wasserlinie
- 12: Hydraulikträger
- 13: Anhängerkupplung
- 14: Basisprofil
- 15: Kupplung
- 16: Deichsel
- 17: Fahrwerk
- 18: Kupplungsteil
- 19: Kupplungsteil
- 20: Betätigungszylinder
- 21: Betätigungszylinder
- 22: Betätigungszylinder
- 23: Betätigungszylinder
- 24: Betätigungszylinder

## Patentansprüche

1. Zugvorrichtung an einem Schleppfahrzeug (4) zum Aus- oder Einbringen eines Bootes (1) aus dem oder in das Wasser, wobei die Zugvorrichtung zum Ankoppeln eines das Boot (1) tragenden Trailers (3) an das Schleppfahrzeug ausgebildet ist, dadurch gekennzeichnet, daß die Zugvorrichtung teleskopförmig ausgestaltet ist.

2. Zugvorrichtung nach Anspruch 1, dadurch gekennzeichnet, daß die Zugvorrichtung ein an dem Schleppfahrzeug (4) an wenigstens zwei Befestigungspunkten (12, 13) befestigtes Basisprofil (14) aufweist, in dem ein oder mehrere teleskopförmig ineinander in Axialrichtung des Basisprofils (14) verschiebbare Schubprofile (5 - 8) angeordnet sind, wobei das innerste Schubprofil (5) an seinem hinteren Ende ein Kupplungsteil (19) zur Ankupplung an einen Bootstrailer (3) enthält.

3. Zugvorrichtung nach Anspruch 2, dadurch gekennzeichnet, daß die Schubprofile (5 - 8) mittels axial in Richtung des Basisprofils wirkender Hydraulik- oder Pneumatikzylinder gegeneinander verschiebbar sind.

4. Zugvorrichtung nach Anspruch 2, dadurch gekennzeichnet, daß das Basisprofil (14) an der Unterseite des Schleppfahrzeuges (4) an einem vorderen und hinteren Befestigungspunkt (12, 13) befestigt ist, wobei einer der Befestigungspunkte (12) quer zur Längserstreckung des Basisprofils (14) bewegbar ausgebildet ist.

5. Zugvorrichtung nach Anspruch 4, dadurch gekennzeichnet, daß der bewegbare Befestigungspunkt (12) des Basisprofils (14) mittels Hydraulik- oder Pneumatikzylinder in Horizontalrichtung bewegbar ist.

6. Zugvorrichtung nach Anspruch 4 oder 5, dadurch gekennzeichnet, daß der bewegbare Befestigungspunkt des Basisprofils mittels Hydraulik- oder Pneumatikzylinder in Vertikalrichtung bewegbar ist.

7. Zugvorrichtung nach Anspruch 4, dadurch gekennzeichnet, daß der vordere Befestigungspunkt (13) des Basisprofils (14) mit der vorderen Anhängerkupplung (13) eines landwirtschaftlichen Traktors verbindbar ist und der hintere Befestigungspunkt an dem Hydraulikträger (12) des Traktors befestigbar ist.

8. Zugvorrichtung nach einem der vorhergehenden Ansprüche, dadurch gekennzeichnet, daß die auf maximale Länge ausgefahrene Zugvorrichtung eine Länge von mehr als 10 m erreicht.

9. Zugvorrichtung nach Anspruch 8, dadurch gekennzeichnet, daß das Basisprofil (14) vier teleskopisch ineinander geschachtelte Schubprofile (5 - 8) enthält.

10. Zugvorrichtung nach einem oder mehreren der vorhergehenden Ansprüche, dadurch gekennzeichnet, daß Basis- und Schubprofile kastenförmige Querschnitte aufweisen, wobei jeweils zwei Schubprofile bzw. Basisprofile und das Schubprofil mit größtem Durchmesser über Hydraulik- oder Pneumatikzylinder gegeneinander verschiebbar sind.

11. Zugvorrichtung nach einem oder mehreren der vorhergehenden Ansprüche, dadurch gekennzeichnet, daß Basisprofil und Schubprofil zylindrischen Querschnitt aufweisen und mittels eines axialen Hydraulik- oder Pneumatikzylinders betätigbar sind.
